(19) Europäisches Patentamt
European Patent Office
Office européen des brevets

(11) Veröffentlichungsnummer: **0 298 917 B1**

# (12) EUROPÄISCHE PATENTSCHRIFT

(45) Veröffentlichungstag der Patentschrift: **18.01.95**

(51) Int. Cl.[6]: **C08K 5/34**, C09B 57/04

(21) Anmeldenummer: **88810450.2**

(22) Anmeldetag: **30.06.88**

Die Akte enthält technische Angaben, die nach dem Eingang der Anmeldung eingereicht wurden und die nicht in dieser Patentschrift enthalten sind.

## (54) Verfahren zum Färben von hochmolekularem organischem Material mit Pigmenten auf der Basis von Iminoisoindolin.

(30) Priorität: **09.07.87 CH 2617/87**

(43) Veröffentlichungstag der Anmeldung:
**11.01.89 Patentblatt 89/02**

(45) Bekanntmachung des Hinweises auf die Patenterteilung:
**18.01.95 Patentblatt 95/03**

(84) Benannte Vertragsstaaten:
**DE FR GB IT**

(56) Entgegenhaltungen:
**EP-A- 0 101 954**
**DE-A- 2 142 245**
**DE-A- 2 504 321**

(73) Patentinhaber: **CIBA-GEIGY AG**
**Klybeckstrasse 141**
**CH-4002 Basel (CH)**

(72) Erfinder: **von der Crone, Jost, Dr.**
**La Dey**
**CH-1711 Arconciel (CH)**

EP 0 298 917 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Färben von hochmolekularem organischem Material mit Pigmenten auf der Basis von Iminoisoindolin und 4,5,6,7-tetrasubstituiertem 1-Hydrazinoisoindolon-3.

Aus der DE-A-21 42 245 sind Farbstoffe auf der Basis von Iminoisoindolin und unsubstituiertem 1-Hydrazinoisoindolon-3 bekannt. Obwohl in der genannten Publikation erklärt wird, dass diese Farbstoffe je nach ihrer Löslichkeit als Dispersions- oder als Pigmentfarbstoffe geeignet sind, vermögen sie als Pigmente nicht ganz den heutigen Anforderungen der Technik zu genügen.

Umsetzungsprodukte von Iminoisoindolinen mit 4,5,6,7-tetrasubstituiertem 1-Hydrazinoisoindolon-3 sind in der DE-A-25 04 321 als Ausgangsstoffe (Liganden) zur Herstellung von Metallkomplex-Pigmenten beschrieben.

Es ist nun gefunden worden, dass bestimmte Umsetzungsprodukte von Iminoisoindolinen mit 4,5,6,7-tetrasubstituiertem 1-Hydrazinoisoindolon selbst als Pigmente mit sehr guten Eigenschaften verwendet werden können.

Die vorliegende Erfindung betrifft demnach ein Verfahren zum Färben von hochmolekularem organischem Material durch Verwendung von Isoindolinen der Formel I

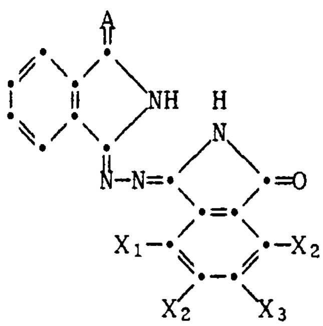

(I),

worin A eine Gruppe der Formel

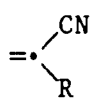

bedeutet, worin R eine Gruppe
-CONHR$_1$, -COOR$_2$ oder

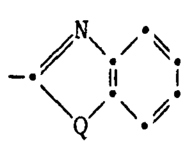

ist und
R$_1$ Wasserstoff, $C_1$-$C_4$-Alkyl, unsubstituiertes oder ein- oder mehrfach durch Halogen, $C_1$-$C_4$-Alkyl, $C_1$-$C_4$-Alkoxy, eine Gruppe -COR$_3$, -NHCOR$_4$ oder

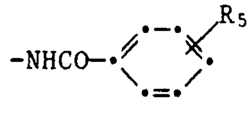

substituiertes Phenyl ist, worin R$_3$ $C_1$-$C_4$-Alkoxy, -NH$_2$ oder -NHR$_4$,
R$_4$ $C_1$-$C_4$-Alkyl und

$R_5$ Wasserstoff, Halogen oder $C_1$-$C_4$-Alkyl bedeuten und
$R_2$ $C_1$-$C_4$-Alkyl und Q NH oder S bedeutet
oder A eine der Gruppen der Formeln

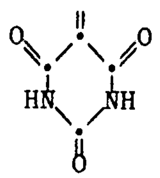

oder

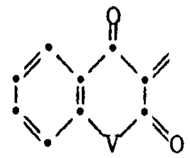

ist, worin V NH oder O bedeutet,
$X_1$ und $X_3$ unabhängig voneinander halogen, $C_1$-$C_4$-Alkoxy, $C_1$-$C_4$-Alkylmercapto, unsubstituiertes oder durch Halogen, $C_1$-$C_4$-Alkyl oder $C_1$-$C_4$-Alkoxy substituiertes Phenoxy oder Phenylmercapto bedeuten und
$X_2$ Halogen ist.

Bedeuten etwaige Substituenten $C_1$-$C_4$-Alkyl, so handelt es sich z.B. um Methyl, Ethyl, n-Propyl, Isopropyl, n-Butyl, sec.-Butyl oder tert.-Butyl.

Bedeuten etwaige Substituenten $C_1$-$C_4$-Alkoxy, so handelt es sich z.B. um Methoxy, Ethoxy, n-Propoxy, Isopropoxy, n-Butoxy, sec.-Butoxy oder tert.-Butoxy.

Bedeuten etwaige Substituenten Halogen, so handelt es sich z.B. um Brom, Fluor und insbesondere Chlor.

$X_1$ und $X_3$ bedeuten als $C_1$-$C_4$-Alkylmercapto z.B. Methylmercapto, Ethylmercapto, n-Propylmercapto, Isopropylmercapto, n-Butylmercapto, sec.-Butylmercapto oder tert.-Butylmercapto.

Von besonderem Interesse ist die erfindungsgemässe Verwendung von Isoindolinen der Formel I, worin $X_1$, $X_2$ und $X_3$ Chlor bedeuten und A die oben angegebene Bedeutung hat.

Bevorzugt ist die erfindungsgemässe Verwendung von Isoindolinen der Formel I, worin A eine Gruppe der Formel

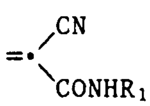

ist, worin $R_1$ Wasserstoff, $C_1$-$C_4$-Alkyl, unsubstituiertes oder ein-oder mehrfach durch Chlor, $C_1$-$C_4$-Alkyl, $C_1$-$C_4$-Alkoxy, Methoxycarbonyl, Benzoylamino oder p-Chlorbenzoylamino substituiertes Phenyl bedeutet und $X_1$, $X_2$ und $X_3$ Chlor sind.

Ebenfalls bevorzugt ist die erfindungsgemässe Verwendung von Isoindolinen der Formel I, worin A eine Gruppe der Formel

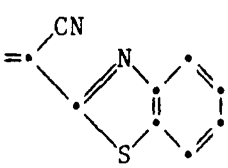

ist.

Besonders bevorzugt ist die erfindungsgemässe Verwendung von Isoindolinen der Formel I, worin A eine Gruppe der Formel

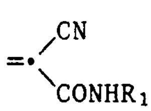

ist, worin $R_1$ Wasserstoff, unsubstituiertes oder durch Chlor oder Methoxy substituiertes Phenyl bedeutet und $X_1$, $X_2$ und $X_3$ Chlor sind.

Die Isoindoline der Formel I stellen an sich bekannte Verbindungen dar. Sollten einige noch neu sein, so können sie in Analogie zu allgemein bekannten Verfahren hergestellt werden, wie sie beispielsweise in der DE-OS 25 04 321 beschrieben sind:

a) durch Kondensation einer Verbindung der Formel II

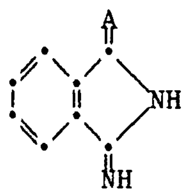

(II)

mit einem Hydrazon der Formel III

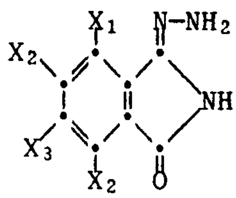

(III)

oder

b) durch Kondensation eines Hydrazons der Formel IV

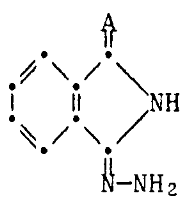

(IV)

mit einer Verbindung der Formel V

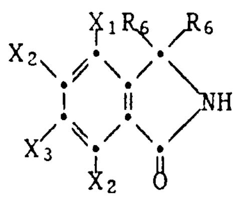

(V),

worin $R_6$ $C_1$-$C_4$-Alkoxy, Halogen oder $NH_2$ bedeutet,

oder

c) durch Kondensation einer Verbindung der Formel VI

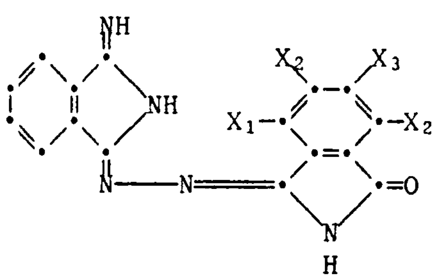

(VI)

mit einer Verbindung der Formel VII

$AH_2$ (VII),

wobei in den Formeln II bis VII A, $X_1$, $X_2$, und $X_3$ die oben angegebene Bedeutung haben.

Bei den Verbindungen der Formeln II, III, IV, V, VI und VII handelt es sich um bekannte Verbindungen.

Die nach den oben beschriebenen Methoden hergestellten erfindungsgemäss einzusetzenden Isoindoline fallen zumeist schon in der Hitze aus und können durch Abfiltrieren und gegebenenfalls durch Waschen mit organischen Lösungsmitteln in reiner Form isoliert werden.

Die erfindungsgemäss einzusetzenden Isoindoline der Formel I stellen wertvolle Pigmente dar, welche im allgemeinen eine gute Textur besitzen und meistens als Rohprodukte verwendet werden können. Falls nötig oder erwünscht, kann man die Rohprodukte durch Mahlen oder Kneten in eine feindisperse Form überführen. Dabei werden zweckmässig Mahlhilfsmittel, wie Glas-, Kunststoff-, Stahl- oder Metallmahlkörper, anorganische und/oder organische Salze in Gegenwart oder Abwesenheit organischer Lösungmittel verwendet. Nach dem Mahlen werden Hilfsmittel wie üblich entfernt, lösliche anorganische Salze z.B. mit Wasser und wasserunlösliche Hilfsmittel beispielsweise durch Wasserdampfdestillation. Auch durch Behandeln der Rohpigmente mit organische Lösungsmitteln kann oft eine Verbesserung der Pigmenteigenschaften erreicht werden.

Hochmolekulare organische Materialien, die erfindungsgemäss mit den Isoindolinen der Formel 1 gefärbt bzw. pigmentiert werden können, sind z.B. Celluloseether und - ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die Isoindoline der Formel I als Toner oder in Form von Präparaten einzusetzen. Bezogen auf das zu pigmentierende hochmolekulare organische Material kann man die Isoindoline der Formel I in einer Menge von 0,01 bis 30 Gew.%, vorzugsweise von 0,1 bis 10 Gew.%, einsetzen.

Die erfindungsgemässe Pigmentierung der hochmolekularen organischen Substanzen mit den Isoindolinen der Formel I erfolgt beispielsweise derart, dass man ein solches Isoindolin gegebenenfalls in Form von Masterbatches diesen Substraten unter Verwendung von Walzwerken, Misch-oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Isoindoline in die Polymeren eingearbeitet werden. Es ist ferner möglich, zwecks Erzielung verschiedener Farbtöne den hochmolekularen, organischen Stoffen neben den erfindungsgemässen Isoindolinen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemäss einzusetzenden Isoindoline gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie z.B. hohe Farbstärke, Transparenz, Farbtonreinheit und Glanz, sowie gute Ueberlackier-, Migrations-, Hitze-, Licht- und Wetterbeständigkeit, aus.

Die nachfolgenden Beispiele dienen zur Erläuterung der Erfindung.

Besipiel 1: 4,32 g 1(Cyan-phenylcarbamoylmethylen)-3-imino-isoindolin und 4,5 g 4,5,6,7-Tetrachlorisoindolin-1-on-3-yliden-hydrazin werden in 50 ml Eisessig unter Rühren zum Rückfluss erwärmt. Es entsteht eine dickflüssige Reaktionsmasse, die mit 100 ml o-Dichlorbenzol verdünnt wird. Es wird 3

Stunden bei Rückflusstemperatur gerührt und anschliessend das Pigment bei 100 °C abgesaugt. Nach dem Waschen mit kaltem o-Dichlorbenzol und anschliessend mit Methanol wird das Nutschgut getrocknet. Man erhält 7,25 g des Isoindolins der Formel

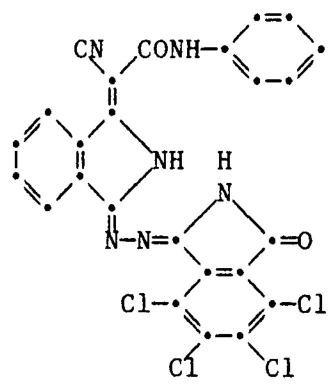

in Form eines gelb-orangen Pulvers, das, in PVC und Lacke eingearbeitet, farbstarke, gelbe Ausfärbungen mit guter Migrations-, Hitze-und Lichtbeständigkeit liefert.

Beispiele 2-14: In analoger Weise, wie in Beispiel 1 beschrieben, erhält man bei Verwendung entsprechender Ausgangsprodukte Isoindoline der Formel

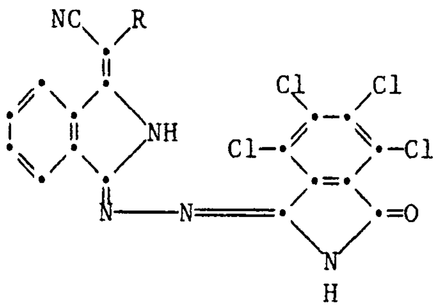

,

worin R die jeweils in der nachfolgenden Tabelle I aufgeführte Bedeutung hat, die, in PVC eingearbeitet, farbstarke Ausfärbungen in den in Tabelle I angegebenen Nuancen mit guten Beständigkeiten ergeben.

Tabelle I

| Beispiel | R | Nuance in PVC (0,2 Gew.% Pigment, bezogen auf PVC) |
|---|---|---|
| 2 | $-CONH_2$ | mittleres Gelb |
| 3 | 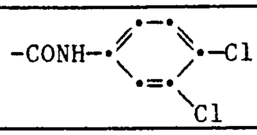 | mittleres Gelb |
| 4 | 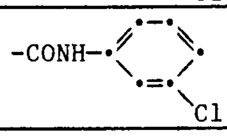 | rotstichiges Gelb |
| 5 | 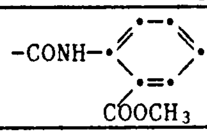 | mittleres Gelb |
| 6 | 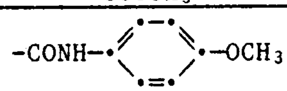 | Orange |
| 7 | 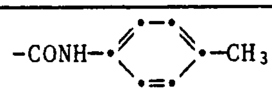 | Orange |
| 8 | 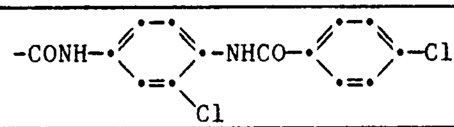 | rotstichiges Gelb |
| 9 | 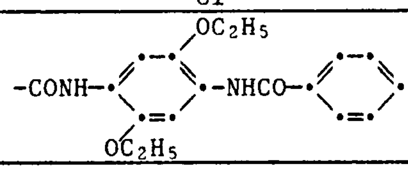 | Braun |
| 10 | 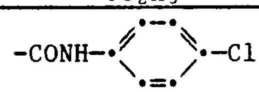 | rotstichiges Gelb |
| 11 | $-COOCH_3$ | mittleres Gelb |
| 12 | 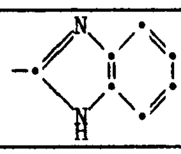 | Rot |
| 13 | 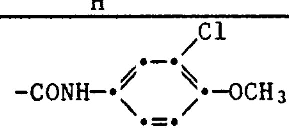 | Orange |
| 14 | 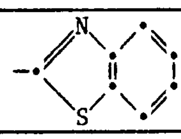 | Rot |

Beispiel 15: 3,22 g 1-(Cyan-4-chlorphenylcarbamoylmethylen)-3-iminoisoindolin und 2,9 g 4,6-Dichlor-3,5-dimethoxy-isoindolin-1-on-3-yliden-hydrazin werden in 50 ml Eisessig unter Rühren zum Rückfluss erwärmt. Das dickflüssige Reaktionsgemisch wird mit 50 ml o-Dichlorbenzol verdünnt und 4 Stunden bei Rückflusstemperatur gerührt. Das entstandene Pigment wird bei 100 °C abfiltriert, mit kaltem o-Dichlorbenzol und dann mit Methanol gewaschen und getrocknet. Man erhält 5,4 g des Isoindolins der Formel

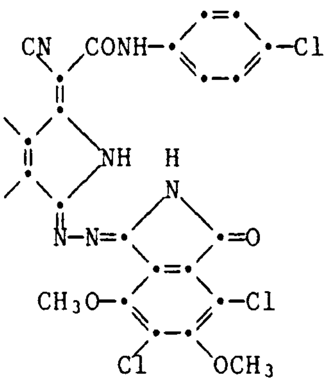

in Form eines gelben Pulvers, das, in PVC und Lacke eingearbeitet, farbstarke, gelbe Ausfärbungen mit guter Migrations-, Hitze- und Lichtbeständigkeit liefert.

Beispiele 16 und 17: In analoger Weise, wie in Beispiel 15 beschrieben, erhält man bei Verwendung entsprechender Ausgansgprodukte Isoindoline der Formel

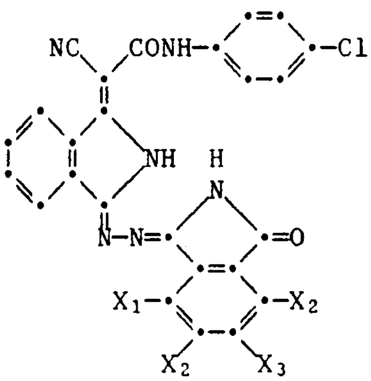

,

worin $X_1$, $X_2$ und $X_3$ die jeweils in der nachfolgenden Tabelle II aufgeführte Bedeutung haben, die in PVC eingearbeitet farbstarke Ausfärbungen in den in Tabelle II angegebenen Nuancen mit guten Beständigkeiten ergeben.

Tabelle II

| Beispiel | $X_1$ | $X_2$ | $X_3$ | Nuance in PVC (0,2 Gew.% Pigment, bezogen auf PVC) |
|---|---|---|---|---|
| 16 | -Cl | -Cl | $-OCH_3$ | mittleres Gelb |
| 17 | -Cl | -Cl | 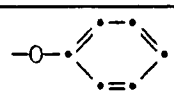 | mittleres Gelb |

Beispiel 18: Eine Mischung von 130 g Steatitkugeln von 8 mm Durchmesser, 47,5 g Alkydmelamineinbrennlack, bestehend aus 60 g kurzöligem Alkydharz ®BECKOSOL 27-320 (Reichhold Chemie AG) 60%-ig in Xylol, 36 g Melaminharz ®SUPER-BECKAMIN 13-501 (Reichhold Chemie AG) 50%-ig in Xylol:Butanol (2:1-Gemisch), 2 g Xylol und 2 g Ethylenglykolmonomethylether, und 2,5 g des nach Beispiel 10 erhaltenen Isoindolins werden in einer 200 ml fassenden Glasflasche mit "Twist-Off"-Verschluss während 120 Stunden auf einem Rollgestell dispergiert. Nach Abtrennen der Steatitkugeln werden 2,4 g der so dispergierten Volltonmischung mit 6 g Titandioxid ®KRONOS RN 59 (KRONOS Titan GmbH) und weiteren 24,0 g des Alkydmelamineinbrennlacks vermischt, auf Aluminiumbleche gespritzt und anschliessend während 30 Minuten bei 130 °C eingebrannt. Man erhält sehr farbstarke rotstichig gelbe Ausfärbungen mit ausgezeichneten Beständigkeiten.

Beispiel 19: 40 mg des gemäss Beispiel 14 erhaltenen Isoindolins werden mit 7,3 ml Dioctylphthalat und 13,3 g eines stabilisierten Polyvinylchlorids vom Typ ®LONZA E 722 in einem Becherglas mit einem Glasstab gut vermischt. Das Gemisch wird auf einem Walzenstuhl während 5 Minuten bei 160 °C zu einer dünnen Folie verarbeitet. Die so erzeugte PVC-Folie weist eine sehr farbstarke, migrations-, wetter- und lichtbeständige rote Färbung auf.

Beispiel 20: Eine Mischung bestehend aus 1,0 g des nach Beispiel 2 erhaltenen Isoindolins, 1,0 g Antioxydans (®IRGANOX 1010, CIBA-GEIGY AG) und 1000 g Polyethylen-HD Granulat (®VESTOLEN A 60-16, HUELS) wird während 15 Minuten in einer Glasflasche auf einer Rollbank vorgemischt. Danach wird die Mischung in zwei Passagen auf einem Einwellenextruder extrudiert. Das so erhaltene Granulat wird auf der Spritzgussmaschine (Allround Aarburg 200) bei 220 °C zu Platten verspritzt und 5 Minuten bei 180 °C nachgepresst. Die Pressplatten weisen farbstarke gelbe Nuancen mit ausgezeichneten Beständigkeiten auf.

Beispiel 21: 1000 g Polypropylengranulat (®DAPLEN PT-55, Chemie LINZ) und 20 g eines 50%-igen Pigmentpräparates, bestehend aus 10 g des nach Beispiel 2 erhaltenen Isoindolins und 10 g Mg-Behenat, werden in einer Mischtrommel intensiv vermischt. Das so behandelte Granulat wird bei 260 bis 285 °C nach dem Schmelzspinnverfahren versponnen. Man erhält gelbgefärbte Fasern mit sehr guten Licht- und textilen Echtheiten.

## Patentansprüche

1. Verfahren zum Färben von hochmolekularem organischem Material durch Verwendung von Isoindolinen der Formel I

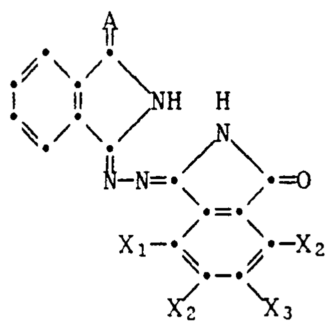

(I),

worin A eine Gruppe der Formel

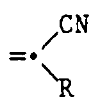

bedeutet, worin R eine Gruppe
-CONHR$_1$, -COOR$_2$ oder

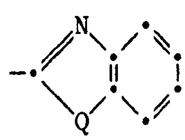

ist und
R$_1$ Wasserstoff, $C_1$-$C_4$-Alkyl, unsubstituiertes oder ein- oder mehrfach durch Halogen, $C_1$-$C_4$-Alkyl, $C_1$-$C_4$-Alkoxy, eine Gruppe -COR$_3$, -NHCOR$_4$ oder

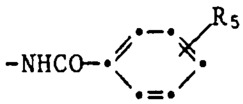

substituiertes Phenyl ist, worin $R_3$ $C_1$-$C_4$-Alkoxy, $-NH_2$ oder $-NHR_4$,
$R_4$ $C_1$-$C_4$-Alkyl und
$R_5$ Wasserstoff, Halogen oder $C_1$-$C_4$-Alkyl bedeuten und
$R_2$ $C_1$-$C_4$-Alkyl und Q NH oder S bedeutet
oder A eine der Gruppen der Formeln

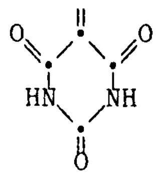

oder

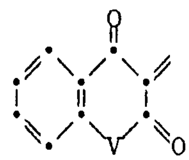

ist, worin V NH oder O bedeutet,
$X_1$ und $X_3$ unabhängig voneinander Halogen, $C_1$-$C_4$-Alkoxy, $C_1$-$C_4$-Alkylmercapto, unsubstituiertes oder durch Halogen, $C_1$-$C_4$-Alkyl oder $C_1$-$C_4$-Alkoxy substituiertes Phenoxy oder Phenylmercapto bedeuten und $X_2$ Halogen ist.

**2.** Verfahren gemäss Anspruch 1, gekennzeichnet durch die Verwendung von Isoindolinen der Formel I, worin $X_1$, $X_2$ und $X_3$ Chlor bedeuten und A die in Anspruch 1 angegebene Bedeutung hat.

**3.** Verfahren gemäss Anspruch 1, gekennzeichnet durch die Verwendung von Isoindolinen der Formel 1, worin A eine Gruppe der Formel

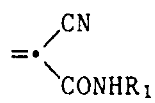

ist, worin $R_1$ Wasserstoff, $C_1$-$C_4$-Alkyl, unsubstituiertes oder ein-oder mehrfach durch Chlor, $C_1$-$C_4$-Alkyl, $C_1$-$C_4$-Alkoxy, Methoxycarbonyl, Benzoylamino oder p-Chlorbenzoylamino substituiertes Phenyl bedeutet und $X_1$, $X_2$ und $X_3$ Chlor sind.

**4.** Verfahren gemäss Anspruch 1, gekennzeichnet durch die Verwendung von Isoindolinen der Formel 1, worin A eine Gruppe der Formel

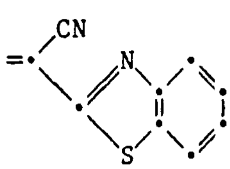

ist.

**5.** Verfahren gemäss Anspruch 1, gekennzeichnet durch die Verwendung von Isoindolinen der Formel 1, worin A eine Gruppe der Formel

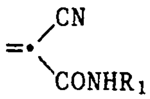

ist, worin $R_1$ Wasserstoff, unsubstituiertes oder durch Chlor oder Methoxy substituiertes Phenyl bedeutet und $X_1$, $X_2$ und $X_3$ Chlor sind.

6. Nach dem Verfahren gemäss Anspruch 1 gefärbtes hochmolekulares organisches Material.

## Claims

1. A process for colouring high molecular weight organic material, which comprises the use of an isoindoline of formula I

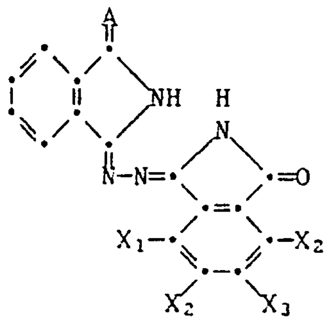

(I),

in which A is a group of formula

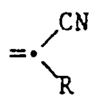

in which R is a group selected from
-$CONHR_1$, $COOR_2$ and

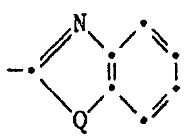

,

and
$R_1$ is hydrogen, $C_1$-$C_4$alkyl, phenyl which is unsubstituted or substituted by one or more members of the group consisting of halogen, $C_1$-$C_4$alkyl, $C_1$-$C_4$alkoxy, -$COR_3$, -$NHCOR_4$ or

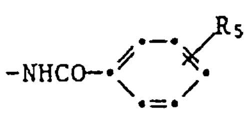

in which $R_3$ is $C_1$-$C_4$alkoxy, -$NH_2$ or -$NHR_4$,
$R_4$ is $C_1$-$C_4$alkyl and
$R_5$ is hydrogen, halogen or $C_1$-$C_4$alkyl, and
$R_2$ is $C_1$-$C_4$alkyl and Q is NH or S;

or A is a group of formula

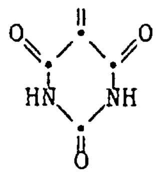

or

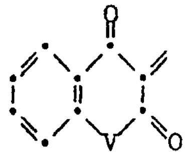

in which V is NH or 0,
$X_1$ and $X_3$ are each independently of the other halogen, $C_1$-$C_4$alkoxy, $C_1$-$C_4$alkylmercapto, or phenoxy or phenylmercapto, each unsubstituted or substituted by halogen, $C_1$-$C_4$alkyl or $C_1$-$C_4$alkoxy, and $X_2$ is halogen.

2. A process according to claim 1, which comprises the use of an isoindoline of formula I, in which $X_1$, $X_2$ and $X_3$ are chlorine and A is as defined in claim 1.

3. A process according to claim 1, which comprises the use of an isoindoline of formula I, in which A is a group of formula

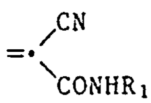

in which $R_1$ is hydrogen, $C_1$-$C_4$alkyl, phenyl which is unsubstituted or substituted by one or more members selected from the group consisting of chlorine, $C_1$-$C_4$alkyl, $C_1$-$C_4$alkoxy, methoxycarbonyl, benzoylamino or p-chlorobenzoylamino, and $X_1$, $X_2$ and $X_3$ are chlorine.

4. A process according to claim 1, which comprises the use of an isoindoline of formula I, in which A is a group of formula

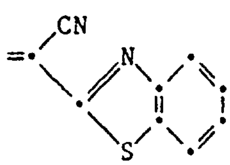

5. A process according to claim 1, which comprises the use of an isoindoline of formula I, in which A is a group of formula

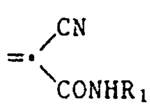

in which $R_1$ is hydrogen, phenyl which is unsubstituted or substituted by chlorine or methoxy, and $X_1$, $X_2$ and $X_3$ are chlorine.

6. High molecular weight organic material coloured by the process according to claim 1.

## Revendications

**1.** Procédé pour teindre une matière organique à haut poids moléculaire en utilisant des isoindolines de formule I

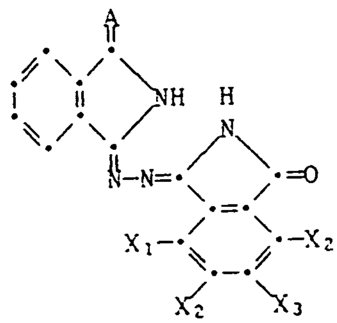

(I),

dans laquelle A représente un groupe de formule

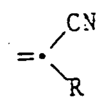

dans laquelle R est un groupe
$-CONHR_1$, $-COOR_2$ ou

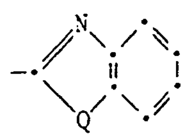

et
$R_1$ est l'hydrogène, un alkyle en $C_1$-$C_4$, un phényle non substitué ou substitué une ou plusieurs fois par un halogène, par un alkyle en $C_1$-$C_4$, par un alcoxy en $C_1$-$C_4$, par un groupe $-COR_3$, par un groupe $-NHCOR_4$ ou par un groupe

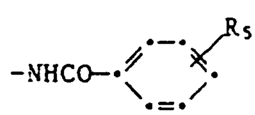

où $R_3$ représente un alcoxy en $C_1$-$C_4$, $-NH_2$ ou $-NHR_4$,
$R_4$ représente un alkyle en $C_1$-$C_4$ et
$R_5$ représente l'hydrogène, un halogène, ou un alkyle en $C_1$-$C_4$ et
$R_2$ représente un alkyle en $C_1$-$C_4$ et Q représente NH ou S
ou A représente un des groupes de formules

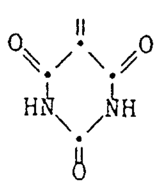

ou

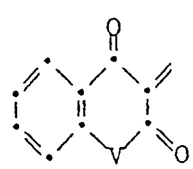

dans laquelle V représente NH ou O,
$X_1$ et $X_3$ indépendamment l'un de l'autre représentent un halogène, un alcoxy en $C_1$-$C_4$, un alkyle en $C_1$-$C_4$-mercapto, un phénoxy ou phénylmercapto non substitué ou substitué par un halogène, par un alkyle en $C_1$-$C_4$ ou par un alcoxy en $C_1$-$C_4$, et $X_2$ est un halogène

**2.** Procédé selon la revendication 1, caractérisé par l'utilisation d'isoindolines de formule I, dans laquelle $X_1$, $X_2$ et $X_3$ représentent le chlore et A a la signification donnée dans la revendication 1.

**3.** Procédé selon la revendication 1, caractérisé par l'utilisation d'isoindolines de formule I, dans laquelle A représente un groupe de formule

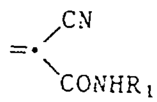

où $R_1$ représente l'hydrogène, un alkyle en $C_1$-$C_4$, un phényle non substitué ou substitué une ou plusieurs fois par le chlore, par un alkyle en $C_1$-$C_4$, par un alcoxy en $C_1$-$C_4$, par un méthoxycarbonyle, par un benzoylamino ou par un p-chlorobenzoylamino, et $X_1$, $X_2$ et $X_3$ représentent le chlore.

**4.** Procédé selon la revendication 1, caractérisé par l'utilisation d'isoindolines de formule I, dans laquelle A représente un groupe de formule

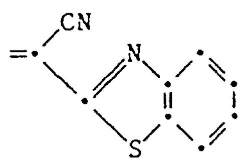

.

**5.** Procédé selon la revendication 1, caractérisé par l'utilisation d'isoindolines de formule I, dans laquelle A représente un coupe de formule

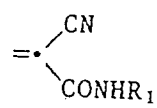

dans laquelle $R_1$ représente l'hydrogène, un phényle non substitué ou substitué par le chlore ou par le méthoxy et $X_1$, $X_2$ et $X_3$ représentent le chlore.

**6.** Matière organique à haut poids moléculaire teinte par le procédé selon la revendication 1.